# EUROPÄISCHE PATENTSCHRIFT

(11) **EP 1 568 457 B1**
(45) Veröffentlichungstag und Bekanntmachung des Hinweises auf die Patenterteilung: **22.08.2007**
(21) Anmeldenummer: 05010482.7
(22) Anmeldetag: 11.06.2002
(51) Int. Cl.: B28D 5/00, G01N 23/20

(54) **Vorrichtung und Verfahren zur Bestimmung der Orientierung einer kristallografischen Ebene relativ zu einer Kristalloberfläche**
Device and method for determining the orientation of a crystallographic plane in relation to a crystal surface
Dispositif et procédé de détermination de l'orientation d'un plan cristallographique par rapport à la surface d'un cristal

(30) Priorität: 13.06.2001 DE 10128630
(43) Veröffentlichungstag der Anmeldung: 31.08.2005
(62) Teilanmeldung aus: 02778889.2
(73) Patentinhaber: Freiberger Compound Materials GmbH, 09599 Freiberg (DE)
(72) Erfinder: Hammer, Ralf, 09599 Freiberg (DE); Gruszynsky, Ralf, 09618 Brand-Erbisdorf (DE); Kleinwechter, André, Dr., 09599 Freiberg (DE); Flade, Tilo, Dr., 09599 Freiberg (DE)
(74) Vertreter: Hofer, Dorothea

(56) Entgegenhaltungen:
- US-A- 5 768 335
- US-A- 6 055 293
- PATENT ABSTRACTS OF JAPAN Bd. 010, Nr. 047 (M-456), 25. Februar 1986 (1986-02-25) -& JP 60 197361 A (FUJITSU KK), 5. Oktober 1985 (1985-10-05)
- PATENT ABSTRACTS OF JAPAN Bd. 015, Nr. 120 (M-1096), 25. März 1991 (1991-03-25) -& JP 03 010760 A (NIPPON SPINDLE MFG CO LTD;OTHERS: 01), 18. Januar 1991 (1991-01-18)

## Beschreibung

Die Erfindung betrifft eine Vorrichtung und ein Verfahren zur Bestimmung der Orientierung einer kristallografischen Ebene relativ zu einer Kristalloberfläche.

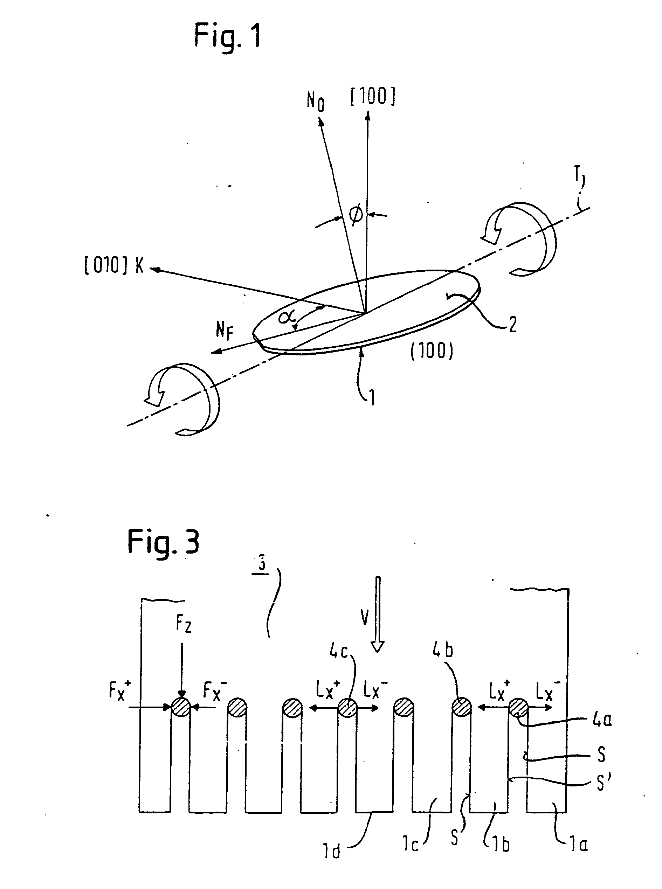

Für bestimmte Anwendungen werden Halbleiterwafer mit einer sogenannten Fehlorientierung benötigt. Wie aus Fig. 1 ersichtlich ist, ist bei einem Halbleiterwafer 1 mit Fehlorientierung eine bestimmte kristallografische Ebene, z.B. die (100) Ebene nicht parallel zu der Waferoberfläche 2. Der Fehlorientierungswinkel φ ist in diesem Fall der Winkel, den der Vektor [100], der senkrecht auf der (100) Ebene steht, mit dem Normalenvektor Nₒ, der senkrecht auf der Waferoberfläche 2 steht, einschließt. Wird eine derartige Fehlorientierung benötigt, so wird ein Einkristall, aus dem die Wafer geschnitten werden, um eine in der Trennebene, d.h. der Waferoberfläche 2, liegende Achse T um den vorbestimmten Winkel φ gekippt.

Bei dem bekannten Verfahren des Innenlochsägens wird zum Erzeugen einer derartigen Fehlorientierung die Orientierung des Kristalls, der auf eine Werkstückhalterung aufgeklebt ist, mittels eines Röntgengoniometers durch Messung der Position des Bragg-Reflexes bezüglich der Werkstückhalterung gemessen. Über diese Halterung erfolgt die Aufnahme auf der Innenlochtrennsäge, die über einen horizontal und vertikal verstellbaren Support verfügt, an dem sich die gemessene Orientierung des Kristalls korrigieren oder auf den gewünschten Wert einstellen läßt. Die erste abgetrennte Scheibe wird nochmals auf einem Röntgengoniometer vermessen und der Support gegebenenfalls nachkorrigiert. Ungenauigkeiten in der Orientierung, die beim Einsetzen der Werkstückhalterung in die Innenlochsägevorrichtung entstehen, können somit nur durch erneutes Vermessen und Nachkorrigieren behoben werden.

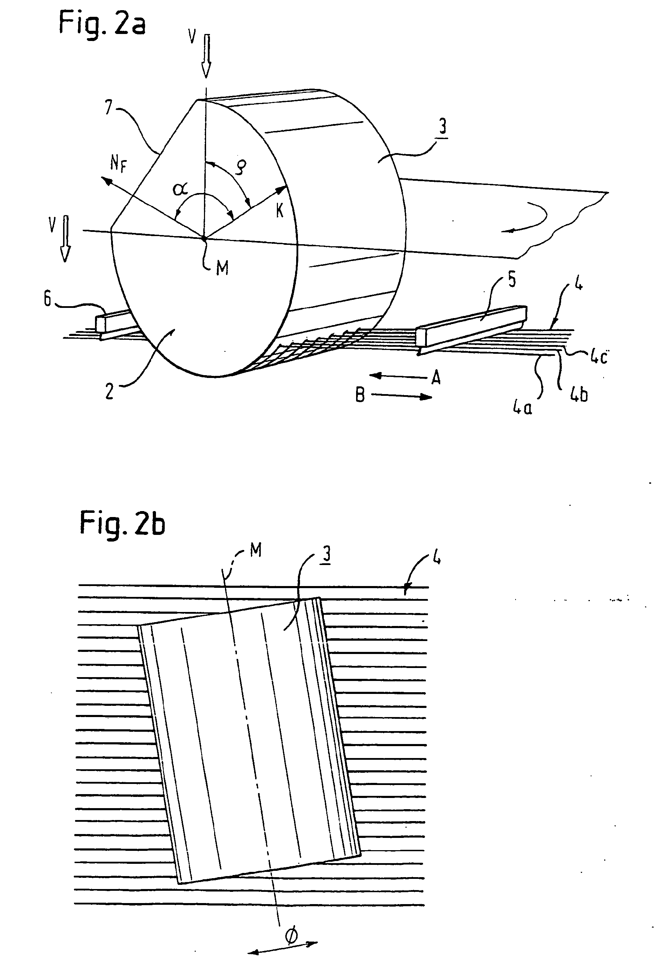

Bei dem bekannten Verfahren des Drahtsägens ist eine derartige Korrektur durch Nachmessen und erneutes Orientieren nicht möglich, da alle Wafer aus einem Einkristall gleichzeitig geschnitten werden. Wie aus Fig. 2a ersichtlich ist, ist beim Drahtsägen ein Einkristall 3 in einer in Fig. 2a nicht dargestellten Halterung gehalten, die über einen Antrieb einer Vorschubeinheit auf das Drahtfeld 4 einer Drahtsäge mit einer Vorschubgeschwindigkeit v hin bewegbar und wieder in die Ausgangsstellung zurückbewegbar ist. Die Drahtsäge besteht aus einer Vielzahl von parallel verlaufenden Drähten 4a, 4b, 4c, die über in Fig.2 nicht dargestellte Rollen gespannt sind und in Ebenen senkrecht zur Mittenlängsachse M des Einkristalls 3 in den in Fig. 2a durch die Pfeile A und B gezeigten Richtungen bewegbar sind. Die Drahtsägevorrichtung umfaßt ferner Vorrichtungen 5 und 6 zum Aufbringen einer Siliciumcarbidkörner enthaltenden Paste auf die Drähte 4a, 4b, 4c auf jeder Seite des Einkristalls 3. Bei Drahtsägen mit galvanisch gebundenen Schneidkörnern ist ferner eine Vorrichtung zum Aufbringen eines Kühl-Schmiermittels vorgesehen.

Es sind Drahtsägen mit einer Orientierungseinheit bekannt, die zum Einstellen der gewünschten Fehlorientierung, wie in Fig. 2b ersichtlich ist, ausschließlich eine Verstellung in einer Ebene parallel zur Ebene des Drahtfeldes 4 zuläßt. Dazu wird der Kristall außerhalb der Drahtsäge auf einem Röntgengoniometer vermessen und so auf eine Werkstückunterlage geklebt, daß die einzustellende Fehlorientierung in der horizontalen Ebene, also der in Fig. 1 gezeigte Winkel φ in einer Ebene parallel zum Drahtfeld 4 liegt. Die Meßwerte des Röntgengoniometers beziehen sich dabei auf eine Anschlagfläche der Werkstückunterlage, die dann an eine Bezugsfläche auf der Drahtsäge angelegt wird. Danach wird die gewünschte Orientierung horizontal eingestellt. Bei diesem Verfahren werden jedoch Fehler durch Verunreinigungen der Anschlag- bzw. Bezugs-flächen sowie Klebefehler, die beim Kleben des Einkristalls auf die Werkstückunterlage auftreten, nicht erfaßt, da die Orientierungsmessung außerhalb der Maschine erfolgt. Ferner muß der Einkristall immer so gedreht werden, daß die einzustellende Fehlorientierung in der horizontalen Ebene parallel zu dem Drahtfeld 4 liegt. Dadurch richtet sich die Bearbeitungsrichtung nach der geforderten Fehlorientierung und kann sich deshalb von Einkristall zu Einkristall ändern.

Aus der US 5,904,136 ist es bekannt, außerhalb einer Drahtsägevorrichtung den erforderlichen Kippwinkel zum Einstellen der Fehlorientierung in einer Kippvorrichtung vorzunehmen, wobei die Kristallorientierung mittels einer Röntgeneinrichtung bestimmt wird und anschließend der Kristall in der Kippvorrichtung in horizontaler und vertikaler Richtung relativ zu dem Drahtfeld gekippt wird. Eventuelle Fehler beim Einsetzen der Kippvorrichtung mitsamt dem Kristall in die Drahtsägevorrichtung können somit jedoch ebenfalls nicht behoben werden.

Aus der US 6,145,422 und aus der JP 03 010760 A ist eine Drahtsäge bekannt.

Aus der JP 10-193338 ist ein Verfahren zum Trennen eines Einkristalls bekannt.

Aus der US 5,768,335 ist eine Vorrichtung zur Bestimmung der Orientierung einer kristallografischen Ebene relativ zu einer Kristalloberfläche nach dem Oberbegriff des Anspruchs 1 bekannt. Bei einem dieser Vorrichtung entsprechenden aus der US 5,768,335 bekannten Verfahren zur Bestimmung der Orientierung einer kristallografischen Ebene relativ zu einer Kristalloberfläche wird ein Röntgenstrahl und ein Lichtstrahl entlang des gleichen Pfads auf die Oberfläche eines Wafers gestrahlt. Der Winkel zwischen dem durch Braggreflexion an einer kristallografischen Ebenen reflektierten Röntgenstrahl und dem an der Kristalloberfläche reflektierten Lichtstrahl wird unmittelbar durch die relative Winkelstellung von zwei Detektoren gemessen.

Es ist Aufgabe der Erfindung, eine Vorrichtung und ein Verfahren zur Bestimmung der Orientierung einer kristallografischen Ebene relativ zu einer Kristalloberfläche für eine Vorrichtung und ein Verfahren zum Trennen eines Einkristalls in einer Trennmaschine bereitzustellen, mit der bzw. mit dem es möglich ist, eine präzise Bestimmung der Orientierung einer kristallografischen Ebene relativ zu einer Kristalloberfläche durchzuführen und dadurch die Ausbeute an Wafern beim Trennen des Einkristalls zu erhöhen.

Die Aufgabe wird gelöst durch eine Vorrichtung gemäß dem Patentanspruch 1 und durch ein Verfahren gemäß dem Patentanspruch 7.

Weiterbildungen der Erfindung sind in den Unteransprüchen angegeben.

Das Verfahren und die Vorrichtung haben den Vorteil, daß durch die präzise Bestimmung der Orientierung einer kristallografischen Ebene relativ zu einer Kristalloberfläche, die Qualität der vom Einkristall abgetrennten Wafer erhöht wird und daß beim Trennen höhere Vorschubgeschwindigkeiten ermöglicht werden. Durch die verbesserte Qualität der erzeugten Wafer können sonst übliche Nachbearbeitungsschritte weitgehend entfallen. Ferner kann die Orientierungsgenauigkeit erhöht werden.

Es folgt die Beschreibung eines Ausführungsbeispieles anhand der Figuren. Von den Figuren zeigen:
- Fig. 1: eine schematische Darstellung eines Wafers;
- Fig. 2a: eine schematische Darstellung einer Drahtsägevorrichtung mit einem zu trennenden Einkristall;
- Fig. 2b: eine schematische Darstellung der Einstellung der Fehlorientierung in einer Drahtsägevorrichtung gemäß dem Stand der Technik;
- Fig. 3: eine schematische Darstellung der beim Drahtsägen auftretenden Kräfte;
- Fig. 4a bis 4d: eine zweidimensionale grafische Darstellung von Warp und Bow von drahtgesägten Wafern in Abhängigkeit von der Bearbeitungsrichtung bei zwei verschiedenen Vorschubwerten;
- Fig. 5a: eine schematische Darstellung der erfindungsgemäßen Vorrichtung zur Bestimmung der Orientierung einer kristallografischen Ebene relativ zu einer Kristalloberfläche;
- Fig. 5b: eine Ansicht eines in eine Sägehalterung eingesetzten Einkristalls in Richtung einer der Stirnflächen;
- Fig. 6: eine schematische Darstellung einer Orientierungsvorrichtung in einer Drahtsägevorrichtung; und
- Fig. 7: eine schematische Darstellung eines Details von Fig. 6.

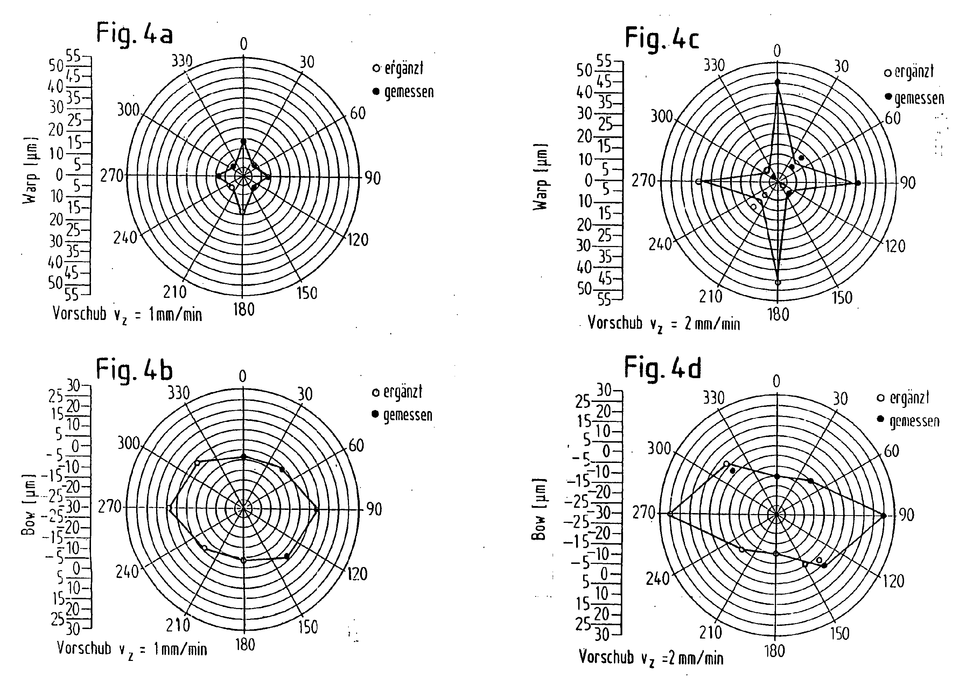

Zum besseren Verständnis werden nachfolgend zuerst die beim Drahtsägen auf den Wafer wirkenden Kräfte anhand der Figuren 1 bis 4 beschrieben. Wie aus Fig. 3 ersichtlich ist, dringen beim Drahtsägen die Drähte 4a, 4b, 4c in den Einkristall 3 ein zum Abtrennen von Scheiben 1a, 1b, 1c etc., die die Wafer bilden. Die Diamantkörner der Drähte erzeugen beim Trennvorgang nach dem Erreichen einer kritischen Eindringtiefe in den Einkristall 3 Mikrorisse, die durch gegenseitige Vernetzung zum Materialabtrag führen. Diese kritische Eindringtiefe hängt von der Orientierung einer in der Waferoberfläche 2 liegenden bestimmten kristallografischen Richtung K, beispielsweise der [010] Richtung, relativ zu der Vorschubrichtung V ab, was nachfolgend erklärt wird.

Wie aus den Figuren 1 und 2a ersichtlich ist, weist der Einkristall 3 ein Orientierungsmerkmal in Form eines ebenen Au-ßenflächenabschnittes 7 auf, den sogenannten Flat, der derart nach dem Züchten des Einkristalls 1 in definierter Weise angebracht worden ist, daß ein Winkel α, den die bestimmte kristallografische Richtung K mit der Normalen N_{F} auf den ebenen Außenflächenabschnitt in der Waferoberfläche 2 aufweist bekannt ist. Da der Winkel α bekannt ist, ist somit auch ein Winkel ρ zwischen der bestimmten kristallografischen Richtung K und der Vorschubrichtung V des Einkristalls in einer Ebene senkrecht zur Mittenlängsachse M des Einkristalls und somit in der Trennebene bekannt. Es ist anzumerken, daß anstelle des Flats auch ein Notch genannter Einschnitt an der Außenseite des Einkristalls vorgesehen sein kann. Entscheidend ist lediglich ein äußeres Merkmal, dessen Anordnung zur bestimmten kristallografischen Richtung K bekannt ist.

Wie aus Fig. 3 ersichtlich ist, sind beim Eindringen der Drähte 4a, 4b, 4c etc. in den Einkristall die auf jeden Draht wirkenden Kräfte Fₓ⁻ bzw. Fₓ⁺ aufgrund unterschiedlicher kritischer Lasten Lₓ⁺ bzw. Lₓ⁻ auf der Vorder- und Rückseite S bzw. S' eines Wafers 1a, 1b, 1c etc. unterschiedlich, so daß das auftretende Ungleichgewicht der Kräfte zu einer Drift eines Drahtes führt, bis die rücktreibende Kraft des gespannten Drahtes das Kräftegleichgewicht wiederhergestellt hat. Die kritischen Lasten sind physikalisch äquivalent den kritischen Eindringtiefen. Die Figuren 4a bis 4d zeigen jeweils den Warp bzw. den Bow für einen Wafer in Abhängigkeit von der Winkeleinstellung der bestimmten kristallografischen Richtung K relativ zu der Vorschubrichtung V. Daraus ergibt sich, daß ein kleiner Warp bzw. ein kleiner Betrag des Bowwertes, die angestrebt werden, entweder durch Verringerung der Vorschubgeschwindigkeit v oder, für eine hohe Vorschubgeschwindigkeit, durch Einstellen des Winkels der kristallografischen Richtung K relativ zu der Vorschubrichtung erreicht werden. Bei einer Vorschubgeschwindigkeit von 2 mm/min. werden beispielsweise minimale Bowwerte bei etwa 60°, 150°, 240° und 330° erreicht. Bei diesen Werten ist die resültierende Kraft, die aus der Summe der Zwangskräfte Fₓ⁻ bzw. Fₓ⁺ entsteht, minimal. Die bevorzugten Winkel, bei denen sich die oben beschriebenen Zwangskräfte kompensieren und die Drähte ohne Querauslenkung in den Einkristall eindringen, hängen von dem Material des Einkristalls, bzw. bei Halbleitern auch von der Dotierung, und von anderen Faktoren ab. Sie sind für jeden Einkristallwerkstoff empirisch zu bestimmen.

Eine Vorrichtung zur Orientierung eines Einkristalls in der Trennmaschine, insbesondere in der Drahtsägevorrichtung ermöglicht die Ausnutzung dieses Effekts und gleichzeitig eine präzise Einstellung einer gewünschten Fehlorientierung φ.

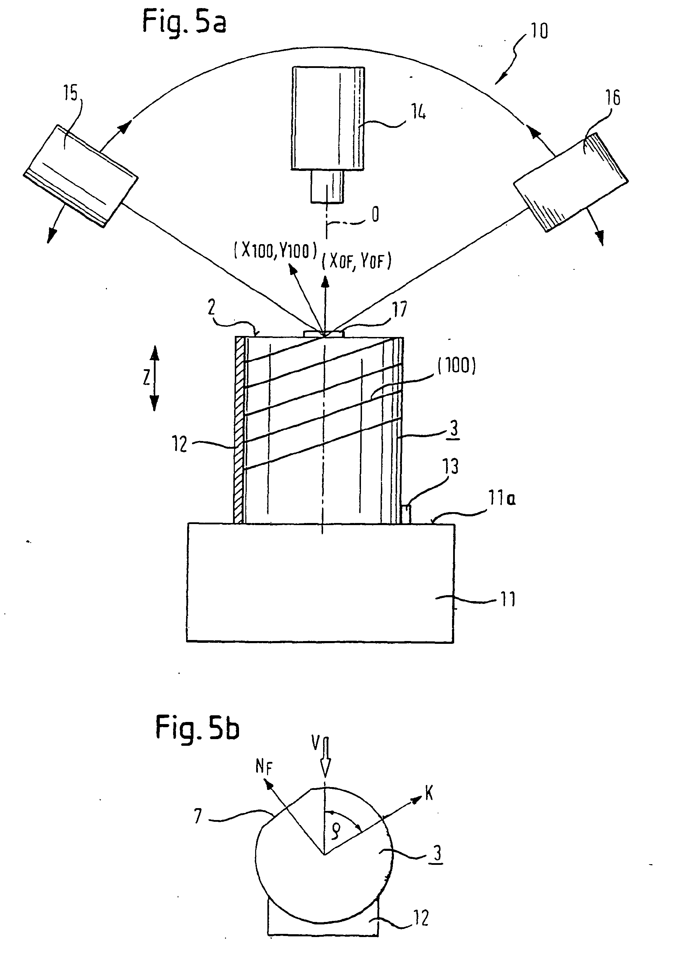

Wie aus Fig. 5a ersichtlich ist, weist die Vorrichtung zum Orientieren eines Einkristalls in einer Trennmaschine eine sich außerhalb'der eigentlichen Trennmaschine befindliche, erfindungsgemäße Vorrichtung 10 zur Bestimmung des Winkels zwischen einer kristallografischen Ebene, beispielsweise der (100) Ebene und der Kristallstirnfläche 2 auf. Die Vorrichtung 10 weist eine Halterung 11 für den Einkristall 3 mit einer ebenen Oberfläche 11a auf, die bevorzugt als Vakuumchuck ausgebildet ist und bei der der im wesentlichen zylindrische Einkristall an einer Stirnfläche über das Einwirken von Unterdruck gehalten ist. Die azimutale Orientierung des Einkristalls, d.h. die Winkelstellung in der späteren Trennebene ist durch die Orientierung des Flats 7 bzw. anderen äußeren Merkmals in der Vorrichtung 10 definiert. Der Einkristall 3 ist dabei entweder auf einer Sägeunterlage 12 festgeklebt, mit der er später in die Drahtsägevorrichtung einsetzbar ist oder das Kleben erfolgt nach der Messung. Die Winkelstellung des an dem Einkristall 3 vorgesehenen Flats 7 relativ zu der Halterung 11 ist über einen Anschlag 13 so eingestellt, daß der Winkel ρ, den die bestimmte kristallografische Richtung K relativ zu der Vorschubrichtung in der Trennmaschine aufweist, wie in Fig. 5b ersichtlich ist, einen zuvor empirisch ermittelten Wert wie oben beschrieben, für die minimale Drahtauslenkung und damit maximal mögliche Vorschubgeschwindigkeit aufweist. Die Halterung 11 ist in vertikaler Richtung verfahrbar. Ferner ist die Halterung 11 mittels eines nicht dargestellten Rotationsmechanismus um ihre zentrale Achse, die parallel zur Mittenlängsachse des Einkristalls verläuft, drehbar. Gegenüberliegend bzw. oberhalb der freien Oberfläche 2 des Einkristalls, die die spätere Oberfläche des ersten abzutrennenden Wafers bildet, ist ein Autokollimationsfernrohr 14 vorgesehen, welches so positioniert ist, daß seine optische Achse O mit der Normalen auf die Oberfläche 11a der Halterung 11 zusammenfällt. Ferner ist ein Röntgengoniometer bestehend aus einer Röntgenröhre 15 und einem zugehörigen Detektor 16 vorgesehen, welches in einem vordefinierten Winkelbereich, beispielsweise von etwa 20° um einen Ursprungspunkt auf der Oberfläche 2 des Einkristalls verfahrbar ist. Ferner ist ein planparalleler optischer Spiegel 17 vorgesehen. Der Spiegel 17 ist mittels eines nicht dargestellten Vakuummechanismus auf der Stirnfläche 2 des Einkristalls befestigbar. Der Spiegel 17 ist ferner an der Stirnfläche 2 des Einkristalls 3 derart befestigbar, daß er auf der optischen Achse des Autokollimationsfernrohrs liegt. Der Meßbereich des Autokollimationsfernrohres beträgt etwa ±1°. Für den Fall, daß der Winkel, den die Kristallstirnfläche 2 relativ zu der ebenen Oberfläche 11a aufweist, diesen Meßbereich überschreitet, ist eine nicht dargestellte optische Keilplatte mit einem definierten Keilwinkel vorgesehen, die eine definierte Strahlablenkung von z.B. 2° bewirkt um die zu vermessende Oberfläche wieder in den Meßbereich zu bringen.

Die Steuerung der Vorrichtung 10 ist so ausgebildet, daß automatisch zuerst eine Winkelmessung der Spiegelorientierung mit dem Autokollimationsfernrohr durchgeführt wird und anschließend eine Messung der gewünschten kristallografischen Ebene, beispielsweise der (100)-Netzebene mittels des Röntgengoniometers. Die Steuerung ist ferner so ausgebildet, daß in einem zweiten Schritt dieselben Messungen nochmals mit einem um 90° um die Mittenlängsachse M gedrehten Einkristall durchführbar sind.

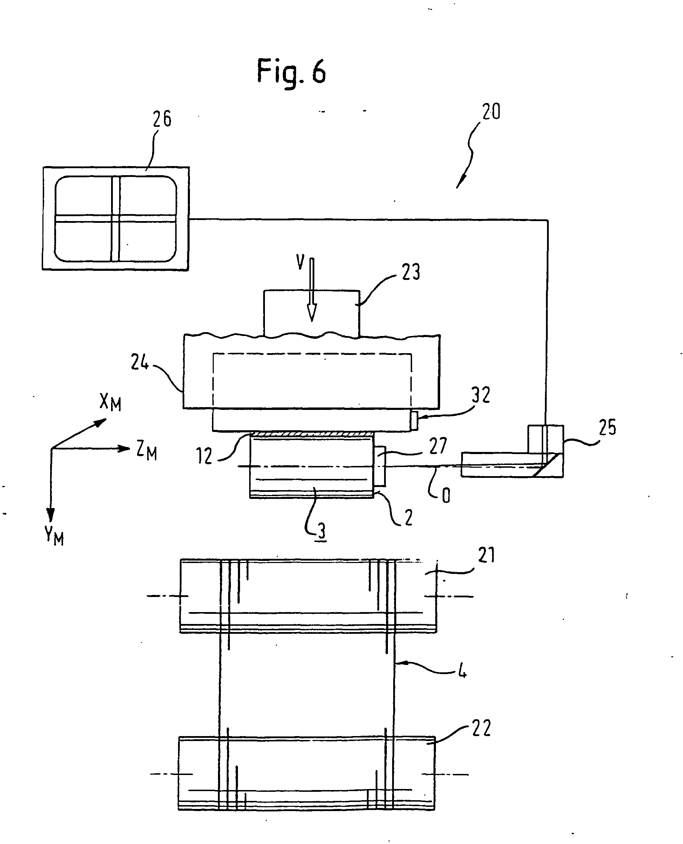

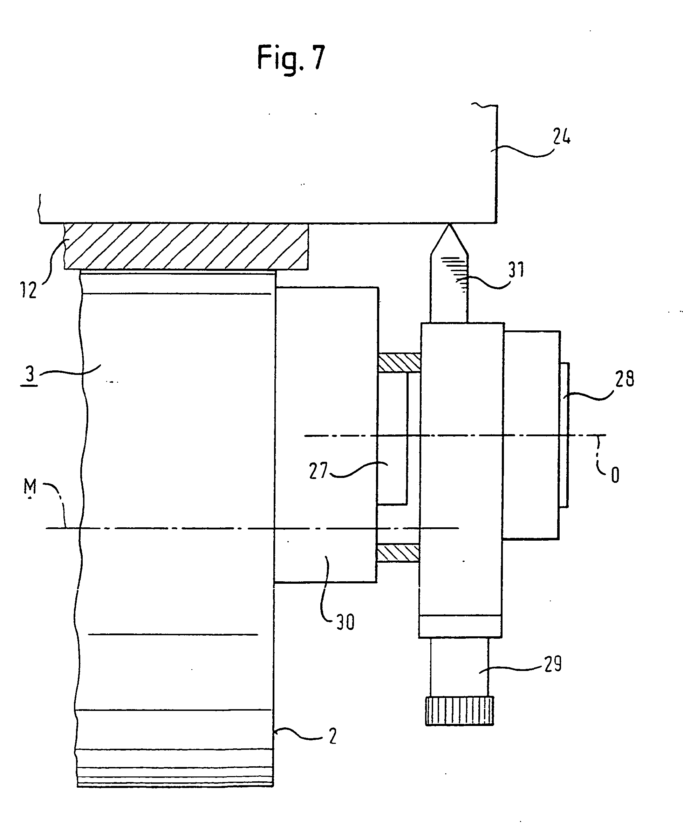

Wie aus den Figuren 6 und 7 ersichtlich ist, weist eine Vorrichtung zum Trennen des Einkristalls, die in diesem Ausführungsbeispiel als Drahtsägevorrichtung 20 ausgebildet ist, Drahtrollen 21 auf, über die das Drahtfeld 4 in horizontaler Richtung geführt ist und darunter befindliche Umlenkrollen 22 zum Rückführen des Drahtfeldes unterhalb der eigentlichen Drahtebene, in der die Trennung erfolgt. Oberhalb des Drahtfeldes 4 ist eine Vorschubeinheit 23 vorgesehen, mit der der Einkristall über die Sägeunterlage 12, die an einer X-Y-Positioniereinheit 24 befestigt ist, in vertikaler Richtung relativ zu dem Drahtfeld mit einer bestimmten Vorschubgeschwindigkeit v bewegbar ist. Die X-Y-Positioniereinheit 24 ist so ausgebildet, daß sie den Einkristall 3 bezogen auf ein maschinenseitiges Koordinatensystem X_{M}, Y_{M}, Z_{M} in einer Richtung parallel zum Drahtfeld 4, die die X_{M}-Richtung ist, und in einer Richtung senkrecht zum Drahtfeld 4, die die Y_{M}-Richtung ist, verstellen kann. Der Schwenkbereich beträgt in X_{M}-Richtung etwa ±5° und in Y_{M}-Richtung etwa ±2°. Es ist ferner ein Autokollimationsfernrohr 25, welches identisch zu dem Autokollimationsfernrohr 14 der Vorrichtung 10 ist, vorgesehen, dessen optische Achse O in einer Ebene parallel zum Drahtfeld 4 liegt. Das Autokollimationsfernrohr 25 ist ferner so angeordnet, daß seine optische Achse bei eingebautem Einkristall etwa in Höhe der Mittenachse des Einkristalls liegt. Zur Auswertung der Winkelmessung des Autokollimationsfernrohres ist eine Auswerteeinheit 26 vorgesehen.

Ferner beinhaltet die Vorrichtung 20 einen Spiegel 27, der identisch zu dem Spiegel 17 der Vorrichtung 10 ist und der mittels eines nicht dargestellten Vakuummechanismus auf der dem Autokollimationsfernrohr 25 zugewandten Stirnfläche 2 des Einkristalls 3 befestigt ist. Ferner ist eine optische Keilplatte 28 in einer drehbaren Fassung 29 zum Erzeugen einer definierten Strahlablenkung von z.B. 2° vorgesehen. Spiegel 27 und Keilplatte 28 sind an einer Halterung 30, die den Vakuummechanismus beinhaltet, befestigt. Es ist ferner ein Anschlag 31 vorgesehen, der einen definierten Abstand des Spiegels 27 mit der Keilplatte 28 von der X-Y-Positioniervorrichtung 24 festlegt.

Zum Justieren der gesamten Vorrichtung ist ferner eine Referenzfläche 32 vorgesehen, die an der Vorschubeinheit 23 gegenüberliegend dem Autokollimationsfernrohr 25 befestigt ist. Die Referenzfläche weist eine hohe Ebenheit und mechanische Stabilität auf und eine leicht zu reinigende Oberfläche, um Verschmutzungen vor der Messung leicht zu beseitigen. Mit Hilfe einer nicht dargestellten Kamera, die direkt auf der Referenzfläche montierbar ist, ist die Referenzfläche in der horizontalen Ebene parallel zum Drahtfeld 4 ausrichtbar.

Der Betrieb der erfindungsgemäßen Vorrichtung 10 und der nicht erfindungsgemäßen Vorrichtung 20 ist wie folgt. Zuerst wird der Einkristall 3, wie in Fig. 5b gezeigt ist, mit dem Flat 7 unter Zuhilfenahme eines nicht dargestellten Anschlages in einer bestimmten Winkelorientierung zu der Sägeunterlage 12 auf diese aufgeklebt. Der Winkel wird dabei so gewählt, daß das Flat 7 in azimutaler Richtung derart orientiert ist, daß die bestimmte kristallografische Richtung K in einem vorgegebenen Winkel ρ zur Vorschubrichtung V steht, bei dem die auf den Draht wirkenden Zwangskräfte sich gegenseitig nahezu aufheben, um somit eine möglichst große Vorschubgeschwindigkeit einstellen zu können. Dann wird, wie in Fig. 5a gezeigt ist, der Einkristall 3 samt der Sägeunterlage 12 auf der Halterung 11 der Vorrichtung zum Bestimmen der Orientierung der kristallografischen Ebene relativ zur Stirnfläche 2 des Einkristalls mittels eines nicht dargestellten Vakuummechanismus eingesetzt. Der Vakuummechanismus erlaubt das direkte Aufliegen des Einkristalls 3 auf der Oberfläche 11a der Halterung 11. Anschließend wird die Halterung 11 in eine bestimmte Höhenposition verfahren, so daß sich die Stirnfläche 2 des Einkristalls in der Fokalebene des Röntgengoniometers befindet. Dann wird der Spiegel 17 mittels des Vakuummechanismus auf die Stirnfläche 2 aufgesetzt und fixiert. Anschließend wird mittels des Autokollimationsfernrohres 14 eine Winkelmessung der Spiegeloberfläche vorgenommen, indem eine Abweichung eines reflektierten Fadenkreuzes von dem auf die Spiegeloberfläche projizierten Fadenkreuz bestimmt wird. Da die Oberfläche des Spiegels 17 parallel zur Stirnfläche 2 des Einkristalls 3 orientiert ist und die optische Achse O des Autokollimationsfernrohres 14 senkrecht auf der Oberfläche 11a der Halterung 11, die die Bezugsfläche bildet, steht, läßt sich mit dieser Messung die Winkeleinstellung der Spiegeloberfläche bzw. der Stirnfläche des Einkristalls relativ zur Oberfläche 11a der Halterung 11 bestimmen.

Alternativ wird der Einkristall ohne Sägeunterlage vermessen, wobei die Orientierung des Flat in der Röntgeneinrichtung beispielsweise durch einen Anschlag definiert wird.

Die gewünschte kristallografische Ebene, beispielsweise die (100)-Ebene ist im allgemeinen nicht parallel zur Stirnfläche 2 des Einkristalls 3. Zur Bestimmung der Richtung der kristallografischen Ebene wird der Bragg-Reflex mit dem Röntgengoniometer 15, 16 gemessen, welches hierzu in einem definierten Winkelbereich verfahren wird. Die Röntgenröhre 15 und der Detektor 16 befinden sich hierzu in bekannter Weise in einem festen Winkelabstand zueinander und werden auf einem Kreisbogen in dem vorgegebenen Winkelbereich verfahren. Der Bragg-Reflex gibt den Winkel an, den die kristallografische Ebene mit der Oberfläche 11a der Halterung 11 einschließt. Die röntgengoniometrische Messung wird wiederholt, wobei der Einkristall um 90° gedreht wird. Durch die optische und röntgengoniometrische Messung werden zwei Vektoren erhalten, die Röntgenmeßwerte (x₁₀₀, y₁₀₀) und die optischen Meßwerte (x_{OF}, y_{OF}) bezüglich des Nullpunktes der Orientierungsanlage. Die Differenz der beiden Vektoren ergibt die Orientierung der kristallografischen (100)-Ebene zur Kristallstirnfläche 2 unabhängig von allen äußeren Bezugssystemen wie Kitleisten, Druckstücken, Befestigungschucks usw. Nach dieser Messung ist die Orientierung der kristallografischen (100)-Ebene bezüglich der Stirnfläche 2 des Einkristalls bekannt. Daraus ergeben sich Korrekturwerte für die X-Y-Positionierung in der Drahtsäge zur Einstellung einer gewünschten Fehlorientierung.

Anschließend wird auf der Drahtsäge 20 mit Hilfe des identischen Autokollimationsfernrohres 25 und des identischen planparallelen Spiegels 27 die Position der Stirnfläche 2 an dem Kristall gemessen. Die Nullpunktsjustierung der X-Y-Positioniereinheit 24 in dem maschinenseitigen Koordinatensy-stem X_{M}, Y_{M} erfolgt dabei mittels der Referenzfläche 32. In Y_{M}-Richtung, also in Vorschubrichtung wird die Justierung nur einmal werkseitig, beispielsweise mit einer Meßuhr, vorgenommen. Die Nullpunktsbestimmung in X_{M}-Richtung, d.h. in der Drahtebene erfolgt bei jedem Rollenwechsel des Schneiddrahtes. Hierzu wird die Referenzfläche 32 am Drahtfeld horizontal ausgerichtet mit einer an der Referenzfläche befestigten Kamera die X-Position relativ zu einem Referenzdraht des Drahtfeldes bestimmt.

Zur Justierung des Autokollimationsfernrohres 25 wird die Vorschubeinheit 23 in die Referenzposition verfahren, d.h. die Referenzfläche 32 befindet sich in der optischen Achse des Autokollimationsfernrohres 25, und der Spiegel 27 auf die Referenzfläche aufgesetzt sowie die Position des Autokollimationsfernrohres gemessen. Dann erfolgt eine elektronische Referenzierung anhand der Referenzfläche 32, wobei der Spiegel 27 mittels der Vakuumbefestigungsvorrichtung an die Referenzfläche 32 angesaugt wird. Dann wird der Spiegel 27 entfernt und die Vorschubeinheit in die Belade- bzw. Orientierungsposition gefahren und der Einkristall 3 mit der Sägeunterlage 12 befestigt. Sodann wird der Spiegel 27 an der Kristallstirnfläche 2 befestigt und die Winkeleinstellung der Stirnfläche 2 mit dem Autokollimationsfernrohr 25 gemessen. Dann werden die aus der Messung in der Vorrichtung 10 gewonnenen Korrekturwerte eingegeben und die horizontale und vertikale Positionseinstellung des Einkristalls vorgenommen, so daß die kristallografische Ebene den vorbestimmten Winkel zum Drahtfeld aufweist. Der Spiegel wird entfernt und die Trennung durchgeführt.

Bei dem beschriebenen Verfahren bleibt die azimutale Winkeleinstellung der bestimmten kristallografischen Richtung K erhalten, und es kann mit hohen Vorschubgeschwindigkeiten im Vergleich zum Stand der Technik gearbeitet werden. Die Vorschubgeschwindigkeiten betragen beispielsweise für das Trennen eines 6-Zoll-GaAs Einkristalls etwa das vierfache verglichen mit der herkömmlichen Orientierung, bei der es nicht möglich ist, die azimutale Winkelposition geeignet einzustellen.

In einer Abwandlung wird die gewünschte Fehlorientierung durch Vorsehen der Keilplatte berücksichtigt. In einer weiteren Abwandlung der Trennvorrichtung ist der Einkristall in der Trennvorrichtung um seine in Fig. 1 gezeigte Achse No, die senkrecht auf der Waferoberfläche steht drehbar, um den optimalen Winkel zu Minimieren der Schnittkräfte einzustellen. Alternativ ist es auch möglich, den optimalen Winkel zum Minimieren der Schnittkräfte über ein Kippen des Drahtfeldes einzustellen. Bevorzugt ist dann eine Meßvorrichtung zum Messen der Auslenkung der Trennvorrichtung beim Schnitt vorgesehen.

Anstelle des Ausschlags in der Meßvorrichtung 10 kann auch ein berührungsloses Abstandsmeßsystem zur Detektion der Orientierung des Flats verwendet werden.

Sämtliche Fehler durch die Klebung oder Verunreinigung von Anschlägen, Bezugsflächen usw. entfallen, da auf der Drahtsägevorrichtung 20 direkt gemessen werden kann. Die beschriebene Vorrichtung und das Verfahren lassen eine hochgenaue direkte Messung auf der Drahtsäge ohne Sicherheitsrisiko zu. Ferner ist die Winkelmessung mit dem Autokollimationsverfahren unabhängig vom Meßabstand, so daß die Anbringung des Autokollimationsfernrohres 25 außerhalb des Trennraumes möglich ist. Zum Trennen kann dann die entsprechende Schutzhaube geschlossen werden. Die X-Y-Positionierungseinheit ermöglicht die vertikale und horizontale Einstellung der Komponenten der Fehlorientierung, so daß die Bearbeitungsrichtung des Kristalls jederzeit frei wählbar ist und als Regelgröße für die Drahtauslenkung genutzt werden kann.

Die Anwendung der Erfindung ist nicht auf eine Drahtsägevorrichtung beschränkt, sondern kann beispielsweise auch für eine Innenlochtrennvorrichtung verwendet werden.

## Patentansprüche

1. Vorrichtung zur Bestimmung der Orientierung einer kristallografischen Ebene relativ zu einer Kristalloberfläche,
mit einer Halterung (11) für den Einkristall (3), mit der der Einkristall (3) so gehalten wird, dass seine zu vermessende Oberfläche (2) freiliegt,
wobei die Vorrichtung weiter umfasst:
eine Winkelmessvorrichtung (14, 17) zur Messung des Winkels, den die zu vermessende Oberfläche (2) relativ zu einer Bezugsachse der Halterung aufweist und
mit einer röntgenografischen Messeinrichtung (15, 16) zur Bestimmung des Winkels der kristallografischen Ebene relativ zu der Bezugsachse, **dadurch gekennzeichnet, dass**
die Winkelmessvorrichtung (14, 17) einen auf der zu vermessenden Oberfläche (2) anzuordnenden Spiegel (17) und ein Autokollimationsfernrohr (14) umfasst, dessen optische Achse (0) mit der Bezugsachse zusammenfällt.

2. Vorrichtung nach Anspruch 1, **dadurch gekennzeichnet, dass** der Einkristall (3) im wesentlichen zylindrisch ausgebildet ist und die zu vermessende Oberfläche (2) eine Stirnfläche des Zylinders ist und die Halterung (11) eine ebene Fläche (11a) aufweist, auf die der Einkristall (3) mit seiner der zu vermessenden Oberfläche gegenüberliegenden Stirnfläche fixierbar ist und dass die Bezugsachse die Normale auf die ebene Fläche (11a) ist.

3. Vorrichtung nach Anspruch 1 oder 2, **dadurch gekennzeichnet, dass** die röntgenografische Meßeinrichtung als Röntgengoniometer ausgebildet ist, welches eine Röntgenröhre (15) und einen Detektor (16) umfaßt, die in einem Winkelbereich um die Bezugsachse gemeinsam verfahrbar sind zum Messen von Bragg-Reflexen für die kristallografische Ebene.

4. Vorrichtung nach einem der Ansprüche 1 bis 3, **dadurch gekennzeichnet, dass** die Halterung (11) in Richtung der Bezugsachse verfahrbar ist.

5. Vorrichtung nach einem der Ansprüche 1 bis 4, **dadurch gekennzeichnet, dass** die Halterung (11) eine Vakuumansaugvorrichtung zum Fixieren des Einkristalls (3) mittels Unterdruck aufweist.

6. Vorrichtung nach einem der Ansprüche 1 bis 5, **dadurch gekennzeichnet, dass** der Einkristall in der Halterung einen Anschlag (13) aufweist, mit der der Einkristall (3) in einer vorgegebenen Winkelorientierung in einer Ebene senkrecht zur Bezugsachse fixierbar ist.

7. Verfahren zur Bestimmung der Orientierung einer kristallografischen Ebene relativ zu einer Kristalloberfläche mit einer Vorrichtung nach einem der Ansprüche 1 bis 6,
wobei das Verfahren die folgenden Schritte umfasst:
Messen des Winkels, den die Kristalloberfläche (2) mit einer Bezugsachse einschließt mittels eines Autokollimationsverfahrens,
Messen des Winkels der kristallografischen Ebene relativ zu der Bezugsachse mittels Röntgengoniometrie, und
Bilden der Differenz der gemessenen Winkel.

## Claims

1. Apparatus for determining the orientation of a crystallographic plane relative to a crystal surface, comprising a holder (11) for the single crystal (3) with which the single crystal (3) is held in such a way that its surface (2) to be measured is exposed,
wherein the apparatus further comprises:
an angle measuring device (14, 17) for measuring the angle which the surface (2) to be measured has relative to a reference axis of the holder, and
an X-ray measuring device (15, 16) for determining the angle of the crystallographic plane relative to the reference axis, **characterized in that**
the angle measuring device (14, 17) includes a mirror (17) to be arranged on the surface (2) to be measured and an autocollimation telescope (14) whose optical axis (O) coincides with the reference axis.

2. Apparatus according to claim 1, **characterised in that** the single crystal (3) is essentially cylindrical and the surface (2) to be measured is an end face of the cylinder, and the holder (11) comprises a plane surface (11a) to which the single crystal (3) can be fixed with its end face opposite the surface to be measured and **in that** the reference axis is the normal to the plane surface (11a).

3. Apparatus according to claims 1 or 2, **characterised in that** the X-ray measuring device is designed as an X-ray goniometer which includes an X-ray tube (15) and a detector (16) which are movable together within an angular range about the reference axis for measuring Bragg reflections for the crystallographic plane.

4. Apparatus according to any one of claims 1 to 3, **characterised in that** the holder (11) is movable in the direction of the reference axis.

5. Apparatus according to any one of claims 1 to 4, **characterised in that** the holder (11) comprises a vacuum suction device for fixing the single crystal (3) by means of partial pressure or vacuum

6. Apparatus according to any one of claims 1 to 5, **characterised in that** the single crystal in the holder comprises a stop (13) with which the single crystal (3) can be fixed in a predetermined angular orientation in a plane perpendicular to the reference axis.

7. Method for determining the orientation of a crystallographic plane relative to a crystal surface using an apparatus according to any one of claims 1 to 6, the method comprising the steps of
measuring the angle which the crystal surface (2) forms with a reference axis by an autocollimation method,
measuring the angle of the crystallographic plane relative to the reference axis by X-ray goniometry, and
subtracting the measured angles.

## Revendications

1. Dispositif de détermination de l'orientation d'un plan cristallographique par rapport à une surface de cristal,
avec une fixation (11) pour le monocristal (3), à l'aide de laquelle le monocristal (3) est maintenu de manière que sa surface (2) à mesurer soit placée librement,
le dispositif comprenant en outre :
un dispositif de mesure angulaire (14, 17), pour la mesure de l'angle que fait la surface (2) à mesurer par rapport à un axe de référence de la fixation
avec un dispositif de mesure (15, 16) diffractométrique à rayons X, pour la détermination de l'angle du plan cristallographique par rapport à l'axe de référence, **caractérisé en ce que**
le dispositif de mesure angulaire (14, 17) comprend un miroir (17), à disposer sur la surface (2) à mesurer, et un télescope à auto-collimation (14), dont l'axe optique (0) coïncide avec l'axe de référence.

2. Dispositif selon la revendication 1, **caractérisé en ce que** le monocristal (3) est sensiblement cylindrique et la surface (2) à mesurer est une face frontale du cylindre, et la fixation (11) présente une surface (11a) plane sur laquelle le monocristal (3) est susceptible d'être fixé avec sa face frontale placée à l'opposé de la surface à mesurer, et **en ce que** l'axe de référence est la normale à la surface (11a) plane.

3. Dispositif selon la revendication 1 ou 2, **caractérisé en ce que** le dispositif de mesure diffractométrique à rayons X est réalisé sous la forme de goniomètre à rayon X, comprenant un tube radiogène (15) et un détecteur (16) déplaçables conjointement dans une plage angulaire autour de l'axe de référence, pour mesurer des réflexions de Bragg pour le plan cristallographique.

4. Dispositif selon l'une des revendications 1 à 3, **caractérisé en ce que** la fixation (11) est déplaçable dans la direction de l'axe de référence.

5. Dispositif selon l'une des revendications 1 à 4, **caractérisé en ce que** la fixation (11) présente un dispositif d'aspiration par le vide, pour la fixation du monocristal (3) en utilisant une pression négative.

6. Dispositif selon l'une des revendications 1 à 5, **caractérisé en ce que** le monocristal présente, dans la fixation, une butée (13), à l'aide de laquelle le monocristal (3) est susceptible d'être fixé sous une orientation angulaire prédéterminée dans un plan perpendiculairement à l'axe de référence.

7. Procédé de détermination de l'orientation d'un plan cristallographique par rapport à une surface de cristal, avec un dispositif selon l'une des revendications 1 à 6,
où le procédé comprend les étapes suivantes :
mesure de l'angle que fait la surface de cristal (2) avec un axe de référence, en utilisant un procédé à auto-collimation,
mesure de l'angle du plan cristallographique par rapport à l'axe de référence, au moyen d'une goniométrie à rayons X, et
formation de la différence des angles mesurés.
